# EUROPÄISCHE PATENTSCHRIFT

(11) **EP 1 275 282 B1**
(45) Veröffentlichungstag und Bekanntmachung des Hinweises auf die Patenterteilung: **15.04.2009**
(21) Anmeldenummer: 02013859.0
(22) Anmeldetag: 22.06.2002
(51) Int. Cl.: A01C 17/00

(54) **Vorrichtung zur Ermittlung der Ausbringmenge eines Zentrifugaldüngerstreuers**
Device for determining the output of a centrifugal fertilizer spreader
Dispositif pour determiner le rendement d'un épandeur d'engrais centrifuge

(30) Priorität: 30.06.2001 DE 10131856
(43) Veröffentlichungstag der Anmeldung: 15.01.2003
(73) Patentinhaber: Amazonen-Werke H. Dreyer GmbH & Co. KG, 49205 Hasbergen (DE)
(72) Erfinder: Dreyer, Heinz, Dr. Dipl.-Ing., 49205 Hasbergen (DE); Scheufler, Bernd Dr. Ing., 49205 Hasbergen (DE); Dreyer, Justus, Dipl-Ing., 49205 Hasbergen (DE); Marquering, Johannes, Dr. Dipl.-Ing., 49176 Borgloh (DE)

(56) Entgegenhaltungen:
- EP-A- 1 269 818
- EP-A2- 0 303 325
- DE-A1- 19 500 824

## Beschreibung

Die Erfindung betrifft eine Vorrichtung gemäß des Oberbegriffes des Patentanspruches 1.

Eine derartige Vorrichtung ist beispielsweise in der DE-195 00 824 A1 beschrieben. Bei diesem Düngerstreuer sind auf der Rückseite des Düngerstreuers Sensoren zur Erfassung des Streufächers angeordnet. Mittels dieser Sensoren ist es möglich, die Düngerverteilung während der Streuarbeit zu ermitteln, wobei aufgrund der ermittelten Daten die Einstellung des Düngerstreuers korrigiert werden kann, so dass während der Streuarbeiten die Düngerverteilung zu optimieren ist.

Der Erfindung liegt die Aufgabe zugrunde, diese bekannte Vorrichtung dahingehend zu verbessern, dass mittels der Sensoren die ausgebrachte Menge ermittelbar und überwachbar ist.

Diese Aufgabe wird erfindungsgemäß durch die kennzeichnenden Merkmale des Patentanspruches 1 gelöst. Infolge dieser Maßnahmen werden mittels des oder der Sensoren, die den Streufächer oder Teilbereiche des Streufächers abtasten, repräsentative Daten über den Massestrom des Streufächers oder in dessen Teilbereichen erfasst. Mittels der Wiegeeinrichtung wird die über eine bestimmte Flächeneinheit ausgebrachte Materialmenge durch Wiegen ermittelt. Über den Kalibriervorgang wird der funktionelle Zusammenhang zwischen der von den Sensoren ermittelten Korndichte und dem tatsächlich ausgebrachten Massestrom ermittelt. Die Kalibrierung erfolgt zu Beginn des Arbeitseinsatzes und ist nach Ausstreuen einer bestimmten Streustoffmasse abgeschlossen. Bei heutiger Genauigkeit der Wiegeeinrichtungen müssen ca. 200 kg Material ausgebracht werden. Bis zum Abschluss des Kalibriervorganges wird die Ausbringmenge auf konventionelle Weise gesteuert, indem auf Erfahrungswerte zurückgegriffen wird und das oder die Dosierorgane entsprechend eingestellt werden. Nach Abschluss der Kalibrierung erfolgt die Einstellung über den Bordcomputer aufgrund der ermittelten Daten der Wiegeeinrichtung. Die Sensoren ermöglichen somit die Bestimmung des Massestromes mit einer sehr einfachen Sensorik, da die Korndichte in einem Abschnitt des Streufächers gemessen wird. Diese Korndichte ist ein Maß für die Ausbringmenge.

Um in einfacher Weise zu überwachen, ob die gewünschte Ausbringmenge ausgebracht wird, ist vorgesehen, dass der Bordcomputer eine Anzeigevorrichtung aufweist, dass der Bordcomputer ein Auswerteprogramm enthält, mittels welchem aufgrund der von dem Sensor ermittelten Korndichten die tatsächlich ausgebrachte Materialmenge im Vergleich zur Sollausbringmenge überwachbar ist und bei einem Überschreiten von festgelegten Toleranzgrenzen von der Sollausbringmenge eine Warnmeldung über die Anzeigevorrichtung in optischer und/oder akustischer Weise ausgegeben wird.

Eine weitere Überwachungsmöglichkeit ist dadurch gegeben, dass die Anzeigevorrichtung die Übereinstimmung/Nichtübereinstimmung zwischen Sollausbringmenge und tatsächlicher Ausbringmenge innerhalb eines vorgegebenen Toleranzbereiches anzeigt.

Um in einfacher Weise dem Fahrer eine Anzeige zur Verfügung zu stellen, auf welcher er die Ausbringmenge ablesen kann, ist vorgesehen, dass der Bordcomputer ein Display aufweist, auf welchem zumindest annähernd die Ausbringmenge pro Fläche, die von jeder einzelnen Scheibe verteilt wird, anzeigbar ist.

Bei einem Mehrscheibenstreuer ist vorgesehen, dass jeder Scheibe ein Sensor zugeordnet ist

Um in automatischer Weise die Dosierorgane entsprechend der Sollausbringmenge einstellen zu können, ist vorgesehen, dass in dem Bordcomputer ein Auswerte- und Einstellprogramm abgespeichert ist, dass auf Grund dieses Programms die Einstellelemente der Dossiereinrichtung ansteuerbar ist.

Eine einfache Einstellung zur gleichmäßigen Materialverteilung lässt sich dadurch verwirklichen, dass zur Einstellung der gleichmäßigen Materialverteilung die Einstellelemente zur Einstellung der Aufgabefläche des Materialstromes auf der Schleuderscheibe von dem Bordcomputer ansteuerbar sind.

Weitere Einzelheiten der Erfindung sind den übrigen Unteransprüchen, der Beispielsbeschreibung und den Zeichnungen zu entnehmen. Hierbei zeigen
- Fig. 1: einen Schleuderdüngerstreuer in perspektivischer Darstellung und Prinzipdarstellung mit der Anordnung der Sensoren hinter dem Streuer,
- Fig. 1a: den Streuer in Seitenansicht und Prinzipdarstellung mit Wiegevorrichtung,
- Fig. 2: die Anordnung von Sensoren im Bereich des Spritzschutzes,
- Fig. 3: die Anordnung von Sensoren seitlich des Düngerstreuers,
- Fig. 4: eine weitere Anordnung von Sensoren.

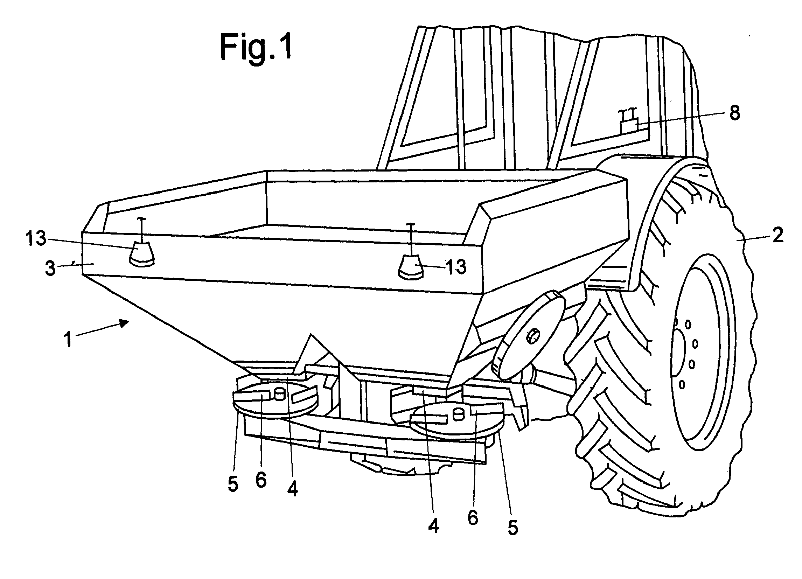

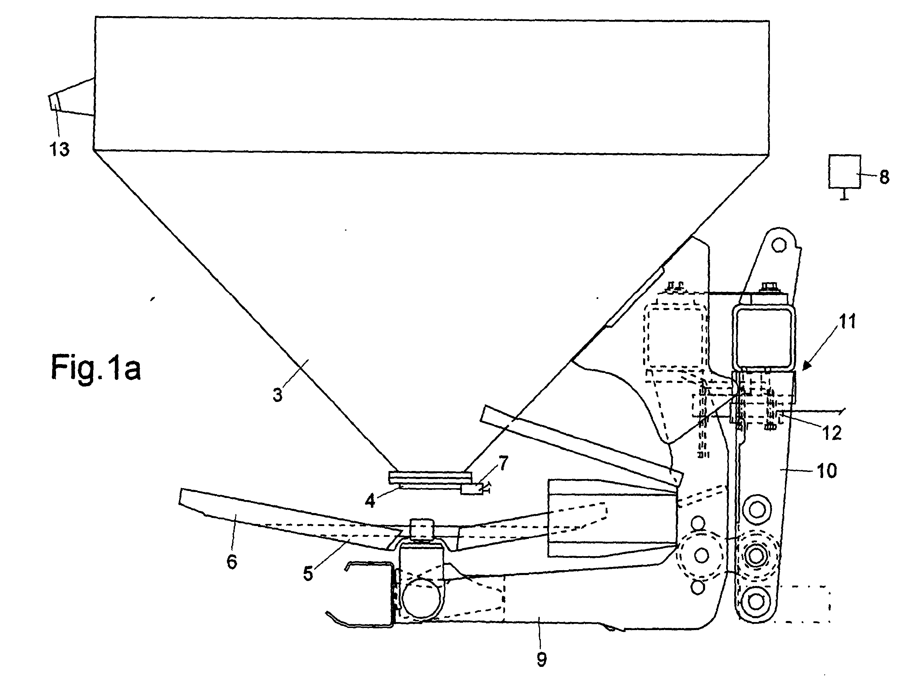

Der Schleuderdüngerstreuer 1 gemäß Fig. 1 und 1a ist an den Dreipunkkraftheber eines Ackerschleppers 2 angeordnet. Der Schleuderdüngerstreuer 1 weist den Vorratsbehälter 3 auf, in dessen unteren Bereich die beiden Dosierorgane 4 angeordnet sind. Unterhalb der Dosierorgane 4 sind die Schleuderscheiben 5 mit den einstellbaren Wurfelementen 6 angeordnet. Die Schleuderscheiben 5 werden mittels einer Kraftquelle rotierend angetrieben und der Dünger wird von den Wurfschaufeln 6 in Form eines Streufächers in Breitverteilung abgeworfen und auf der Bodenoberfläche verteilt. Die Dosierorgane 4 weisen die Einstellmittel 7 auf, mittels derer die Menge Material, die den Schleuderscheiben 5 pro Zeiteinheit aus dem Vorratsbehälter 3 zugeführt wird, einstellbar ist. Die Einstellmittel 7 sind über geeignete Übertragungsmittel, beispielsweise Kabel mit dem Bordcomputer 8 verbunden. Des weiteren ist, wie Fig. 1a zeigt, zwischen dem Rahmen 9 des Vorratsbehälters 3 und der Dreipunktkupplung des Schleppers 2 eine einen Wiegerahmen 10 aufweisende Wiegeeinrichtung 11 angeordnet. Dieser Wiegerahmen 10 weist Wiegeelemente 12 auf. Diese Wiegeelemente sind ebenfalls mit dem Bordcomputer 8 verbunden. Über diese Wiegeeinrichtung 11 kann in bekannter und daher nicht näher erläuterter Weise das sich in dem Vorratsbehälter 3 befindliche Material bzw. die in Zeitintervallen ausgebrachte Materialmenge mittels eines Wiegevorganges in bekannter Weise ermittelt werden.

Im hinteren Bereich des Düngerstreuers 1 sind die beiden Sensoren 13 angeordnet, welche den Streufächer, bzw. Teilbereiche des Streufächers, der von jeder Streuscheibe 5 abgeschleudert wird, abtasten. Jeder Schleuderscheibe 5 ist also ein Sensor 13 zugeordnet. Diese Sensoren 13 sind jeweils über Kabel mit dem Bordcomputer 8 verbunden. Die Sensoren 13 erfassen Daten über die Korndichte des Materiales in dem Streufächer. In dem Bordcomputer 8 ist ein Kalibrierprogramm abgespeichert, welches die Zusammenhänge zwischen dem ausgebrachten Massestrom, dem von den Sensoren 13 gelieferten Daten sowie der von der Wiegeeinrichtung 11 ermittelten tatsächlich ausgebrachten Menge berücksichtigt.

Die Funktionsweise der Vorrichtung und des in dem Bordcomputer 8 abgespeicherten Kalibrierprogramms ist folgender:

Zunächst werden aufgrund von Erfahrungswerten die Dosiereinrichtungen 4 von dem Bordcomputer 8 entsprechend der gewünschten Ausbringmenge eingestellt. Dann wird zunächst eine bestimmte Streustoffmasse, bei den derzeitigen Genauigkeiten der Wiegeeinrichtung 11 etwa 200 kg Material ausgebracht. Während dieser Ausbringphase werden bereits Daten über die Korndichte in dem Streufächer von den Sensoren 13 an den Bordcomputer 8 geliefert. In dieser Phase wird also die Ausbringmenge auf konventionelle Art eingestellt. Nach dem Ausbringen der Menge, die erforderlich ist, damit mit der Wiegeeinrichtung 11 eine ausreichend genaue Wiegung erfolgen kann, erfolgt der sog. Kalibriervorgang. Über die Wiegeeinrichtung 11 wird die tatsächlich ausgebrachte Materialmenge durch Wiegen ermittelt. Falls die ermittelte Ist-Menge nicht mit der gewünschten Ausbringmenge übereinstimmt, wird über den Bordcomputer 8 die Einstellmittel 7 der Dosiereinrichtungen 4 angesteuert und die Dosiereinrichtungen 4 entsprechend neu auf die gewünschten Ausbringmenge nachgestellt. Über den Kalibriervorgang werden über das in dem Bordcomputer 8abgespeicherte Kalibrierprogramm die Sensoren 13 auf dem von der Wiegeeinrichtung 11 ermittelten Ausbringmengenwert kalibriert.

Der Sensor 13 erfasst Daten über die tatsächliche Korndichte in dem Streufächer, so dass in einem Kalibriervorgang der funktionelle Zusammenhang zwischen der Korndichte und dem ausgebrachten Massestrom durch den Bordcomputer 8 ermittelbar ist.

Des weiteren weist der Bordcomputer 8 eine Anzeigevorrichtung auf. Der Bordcomputer 8 enthält ein Auswerteprogramm mittels welchem aufgrund der von den Sensoren 4 ermittelten Korndichten die tatsächlich ausgebrachte Materialmenge im Vergleich zur Sollausbringmenge überwachbar ist. Hierbei ist dieses Programm so ausgelegt, dass bei einem Überschreiten von festgelegten Toleranzgrenzen von der Sollausbringmenge eine Warnmeldung über die Anzeigevorrichtung in optischer oder akustischer Weise ausgegeben wird. Hierbei kann zum Beispiel eine Lampe oder Leuchtdiode aufleuchten oder eine Warnhupe ertönen.

Des weiteren kann die Anzeigevorrichtung die Übereinstimmung zwischen der Sollausbringmenge und der tatsächlichen Ausbringmenge innerhalb eines vorgegebenen Toleranzbereiches anzeigen. Dies kann beispielsweise dadurch geschehen, dass eine grüne Lampe oder Leuchtdiode aufleuchtet. Die Warnmeldung kann beispielsweise dann mit einer roten Lampe oder Leuchtdiode angezeigt werden.

In einer anderen Ausgestaltung der Anzeigevorrichtung kann der Bordcomputer 8 ein Display aufweisen, auf welchem zumindest annähernd die Ausbringmenge pro Fläche, die von jeder einzelnen Scheibe 5 verteilt wird, angezeigt wird.

Aufgrund des in dem Bordcomputers 8 enthaltenen Auswert- und Einstellprogramms werden die Einstellelemente 7 der Dosiereinrichtung 4 angesteuert. Über diese Ansteuerung werden die Dosiereinrichtungen 4 entsprechend erforderlichenfalls nachgestellt, falls aufgrund der von den Sensoren 13 ermittelten Daten, die von dem in dem Bordcomputer enthaltenen Programm ausgewertet werden, nachgestellt, damit die gewünschte Materialmenge ausgebracht wird.

Bei Schleuderdüngerstreuern, welche eine Vorrichtung zur Verstellung der Aufgabefläche des Materiales auf den Schleuderscheiben 5 aufweisen, ist in dem Bordcomputer 8 ein Programm enthalten, mittels welchem die Einstellmittel zur Einstellung der Aufgabefläche des Materiales auf der Schleuderscheiben 5 ansteuerbar sind. Durch diese Einstellung wird eine gleichmäßige Materialverteilung ermöglicht.

Je nach der eingesetzten Sensorik zur Streufächer Abtastung sind verschiedene Ausbaustufen möglich:

Bei einer einfachen Sensorik mit einer Messstelle pro Scheibe 5 wird eine Überwachung und ein Vergleich der Streubilder der einzelnen Scheiben 5 möglich. Hierbei kann dann nach der Kalibrierung der Sensoren 13 auf einem Display näherungsweise die Ausbringmenge pro Fläche der einzelnen Scheiben 5 angezeigt werden. Diese Anzeige kann in grafischer, optischer oder digitaler Weise erfolgen.

Bei einer genauen Sensorik der eingesetzten Sensoren 13 mit einer Messstelle pro Scheiben 5 lässt sich eine zusätzliche Regelung der Ausbringmenge nach dem Kalibriervorgang durchführen.

Bei einer genauen Sensorik der Sensoren 13 mit mehreren Messstellen pro Scheibe 5, d. h. dass quasi der gesamte Streufächer repräsentativ abgetastet wird, kann zusätzlich die automatische Einstellung des gewünschten Streubildes durch Aufgabepunktverstellung und/oder Schaufelverstellung erfolgen.

Durch das in dem Bordcomputer 8 abgespeicherte Steuerungs- und Regelungsprogramm ist es durch den Kalibriervorgang also möglich, auf einfache Weise in Echtzeit laufend die Gleichmäßigkeit der Materialverteilung, sowie die ausgebrachte Materialmenge zu überwachen, so dass eine entsprechende Nachstellung der jeweiligen Organe erfolgen kann. Durch das abgespeicherte Kalibrierprogramm und das Auswerteprogramm wird also eine Bestimmung des Massenstroms mit einer sehr einfachen Sensorik verwirklicht, da nur die Korndichte in dem Streufächer gemessen werden muss. Der funktionelle Zusammenhang zwischen Korndichte und ausgebrachtem Massestrom wird während eines Kalibriervorganges mit Hilfe der Wiegeeinrichtung ermittelt.

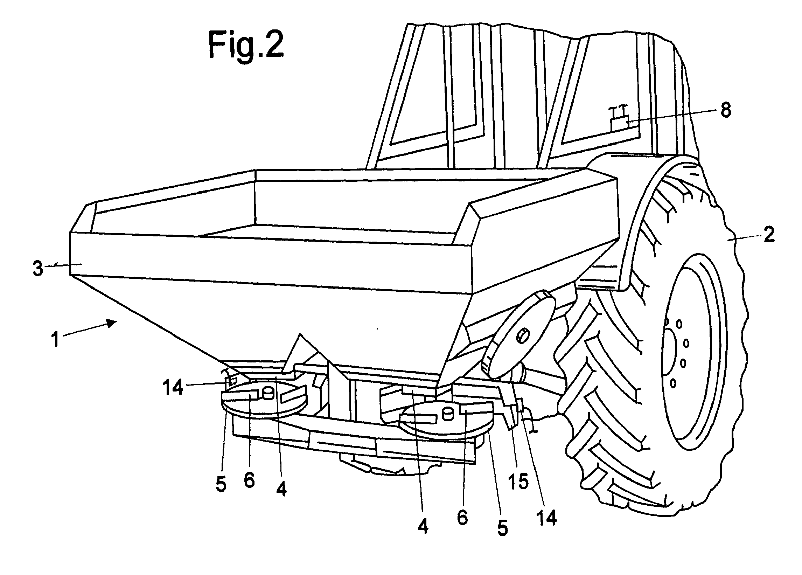

Das Ausführungsbeispiel gemäß Fig. 2 unterscheidet sich vom Ausführungsbeispiel gemäß Fig. 1 und 1a dadurch, dass die Sensoren als sog. Prallsensoren 14, wie beispielsweise Mikrofone etc. ausgebildet sind. Diese Prallsensoren 14 sind an dem Spritzschutz 15 angeordnet und messen das Aufprallgeräusch der Materialpartikel auf dem Spritzschutz 15. Über diesen hier entstehenden Körperschall lassen sich Rückschlüsse auf die Korndichte in dem Streufächer ziehen. Diese von den als Körperschallsensoren wirkenden Sensoren 14 lassen sich Rückschlüsse auf die Korndichte ziehen. Diese Sensoren 14 sind mittels Datenübertragungseinrichtung und mit dem Bordcomputer 8 verbunden, der diese übermittelten Daten entsprechend auswertet und in einem Kalibriervorgang, wie zu dem Ausführungsbeispiel gemäß Fig. 1 und 1a beschrieben, werden die Sensoren 14 kalibriert.

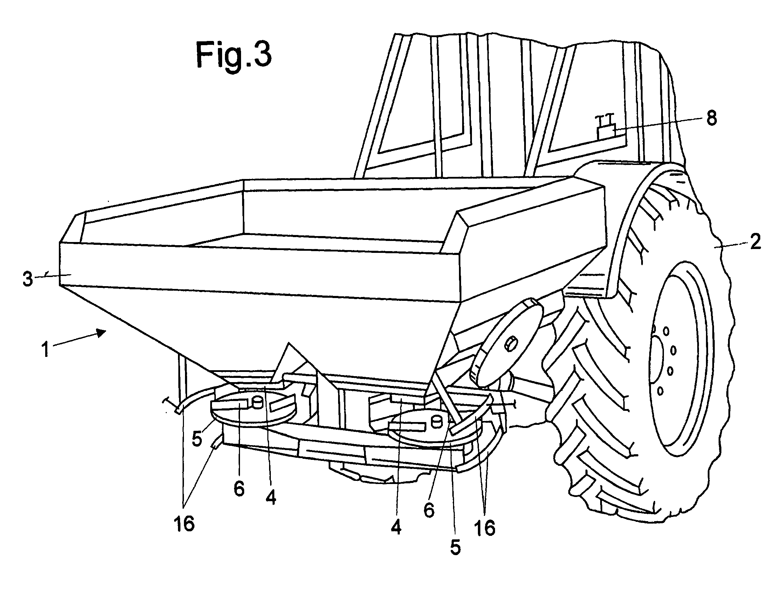

Bei dem Ausführungsbeispiel gemäß Fig. 3 sind seitlich des Streuers als Lichtschranken 16 ausgebildete Sensoren angeordnet. Hierbei kann eine Lichtschranke 16 oder mehrere Lichtpunkte der Lichtschranke vorhanden sein. Diese Lichtschranken 16 können einzeln oder gruppenweise angeordnet sein und sind über Datenübertragungsmittel mit dem Bordcomputer verbunden. Die Auswertung der von den Lichtschranken 16 übermittelten Daten erfolgt, wie zu den Fig. 1 und 1a beschrieben. Es ist auch möglich, diese Lichtschranken 16 über den gesamten Streufächerbereich anzuordnen.

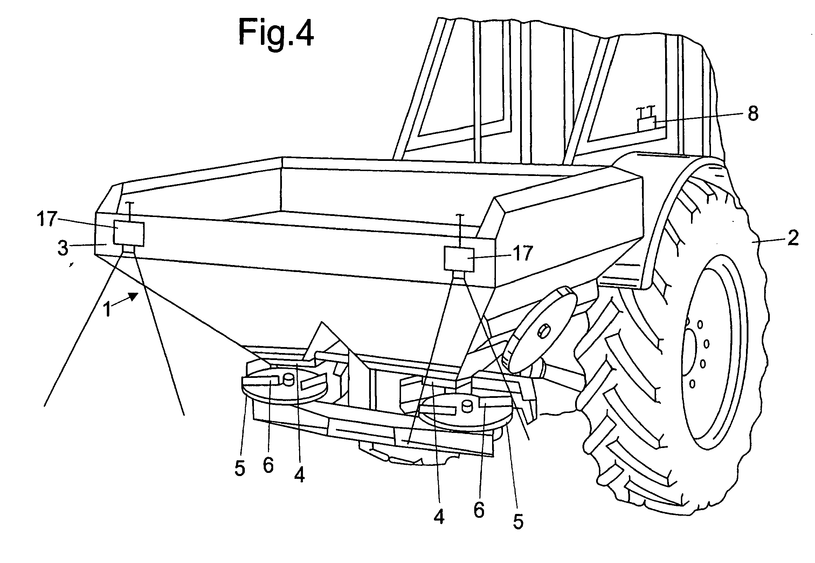

Bei dem Ausführungsbeispiel gemäß Fig. 4 sind im hinteren Bereich des Schleuderdüngerstreuers 1 zwei Kameras 17 angeordnet, 17 sind mit Datenübertragungsleitungen mit dem Bordcomputer 8 verbunden. Die von diesen Kameras 17 übermittelten Daten werden ebenfalls von dem Bordcomputer 8 durch das Auswerteprogramm, wie zu den Fig. 1 und 1a beschrieben ist, verarbeitet. Nötigenfalls kann den Kameras 17 eine künstliche Lichtquelle zugeordnet sein, um bessere Auswerteergebnisse zu erhalten.

## Patentansprüche

1. Vorrichtung zur Ermittlung der Ausbringmenge eines Zentrifugaldüngerstreuers zum Ausbringen von körnigem Material, welches über zumindest ein Dosierorgan in einstellbarer Weise zumindest einer Schleuderscheibe zugeleitet und durch abschleudern von dieser in einem Streufächer auf der Bodenoberfläche verteilt wird, wobei zumindest ein Sensor zur Erfassung von zumindest Teilbereichen des Streufächers vorgesehen ist und mit einem Bordcomputer zusammen wirkt, **dadurch gekennzeichnet, dass** die Vorrichtung weiterhin eine Wiegevorrichtung (11) zur Ermittlung der ausgebrachten Materialienmenge aufweist, dass die Wiegeeinrichtung (11) mit dem Bordcomputer (8) zusammen wirkt, dass in dem Bordcomputer (8) ein Kalibrierprogramm abgespeichert ist, mittels welchem der den Streufächer abtastende Sensor (13,14,16,17)auf die von der Wiegeeinrichtung (11) ermittelten Ausbringmengenwerte kalibrierbar ist.

2. Vorrichtung nach Anspruch 1, **dadurch gekennzeichnet, dass** der Sensor (13,14,16,17) Daten über die tatsächliche Korndichte erfasst, so dass in einem Kalibriervorgang der funktionale Zusammenhang zwischen Korndichte und ausgebrachten Massestrom durch den Bordcomputer (8) ermittelbar ist.

3. Vorrichtung nach einem oder,mehreren der vorstehenden Ansprüche, **dadurch gekennzeichnet, dass** der Bordcomputer (8) eine Anzeigevorrichtung aufweist, dass der Bordcomputer (8) ein Auswerteprogramm enthält, mittels welchem aufgrund der von dem Sensor (13,14,16,17) ermittelten Korndichten die tatsächlich ausgebrachte Materialmenge im Vergleich zur Sollausbringmenge überwachbar ist und bei einem Überschreiten von festgelegten Toleranzgrenzen von der Sollausbringmenge eine Warnmeldung über die Anzeigevorrichtung in optischer und/oder akustischer Weise ausgegeben wird.

4. Vorrichtung nach einem oder mehreren der vorstehenden Ansprüche, **dadurch gekennzeichnet, dass** die Anzeigevorrichtung die Übereinstimmung zwischen Sollausbringmenge und tatsächlicher Ausbringmenge innerhalb eines vorgegebenen Toleranzbereiches anzeigt.

5. Vorrichtung nach einem oder mehreren der vorstehenden Ansprüche, **dadurch gekennzeichnet, dass** der Bordcomputer (8) ein Display aufweist, auf welchem zumindest annähernd die Ausbringmenge pro Fläche, die von jeder einzelnen Scheibe (5) verteilt wird, anzeigbar ist.

6. Vorrichtung nach einem oder mehreren der vorstehenden Ansprüche, **dadurch gekennzeichnet, dass** jeder Scheibe (5) ein Sensor zugeordnet ist

7. Vorrichtung nach einem oder mehreren der vorstehenden Ansprüche, **dadurch gekennzeichnet, dass** in dem Bordcomputer (8) ein Auswerte- und Einstellprogramm abgespeichert ist, das auf Grund dieses Programms die Einstellelemente der Dosiereinrichtung ansteuerbar ist.

8. Vorrichtung nach einem oder mehreren der vorstehenden Ansprüche, **dadurch gekennzeichnet, dass** zur Einstellung der gleichmäßigen Materialverteilung die Einstellelemente (7) zur Einstellung der Aufgabe des Materialstromes auf der Schleuderscheibe von dem Bordcomputer (8) ansteuerbar sind.

## Claims

1. Device for determining the discharge quantity of a centrifugal fertiliser spreader for discharging granular material that is supplied in an adjustable manner via at least one metering member to at least one centrifugal disc and, by means of centrifuging, is distributed by the said centrifugal disc in a broadcasting pattern on the surface of the ground, at least one sensor being provided for detecting at least part regions of the broadcasting pattern and interacting with an on-board computer, **characterised in that** the device additionally includes a weighing device (11) for determining the quantity of material discharged, **in that** the weighing device (11) interacts with the on-board computer (8), **in that** a calibrating program is stored in the on-board computer (8), by means of which calibrating program the sensor (13, 14, 16, 17) scanning the broadcasting pattern can be calibrated to the value of the discharge quantity determined by the weighing device (11).

2. Device according to claim 1, **characterised in that** the sensor (13, 14, 16, 17) collects data concerning the actual grain density such that in a calibration procedure the functional cohesiveness between grain density and discharged mass flow is determinable by the on-board computer (8).

3. Device according to one or more of the preceding claims, **characterised in that** the on-board computer (8) has a display device, **in that** the on-board computer (8) includes an evaluating program, by means of which in view of the grain densities determined by the sensor (13, 14, 16, 17) the quantity of material actually discharged compared to the required discharged quantity can be monitored and where predetermined tolerance limits of the required discharged quantity are exceeded, a warning message is output via the display device in a visual and/or acoustic manner.

4. Device according to one or more of the preceding claims, **characterised in that** the display device displays the match between required discharge quantity and actual discharge quantity within a predetermined range of tolerance.

5. Device according to one or more of the preceding claims, **characterised in that** the on-board computer (8) has a display, on which, at least approximately, the discharge quantity per area that is distributed by each individual disc (5) is displayable.

6. Device according to one or more of the preceding claims, **characterised in that** a sensor is associated with each disc (5).

7. Device according to one or more of the preceding claims, **characterised in that** an evaluating and adjusting program is stored in the on-board computer (8), **in that** the adjusting element of the metering device is activated on account of the said program.

8. Device according to one or more of the preceding claims, **characterised in that** to adjust the regular material distribution, the adjusting elements are activatable by the on-board computer (8) to adjust the charging of the material flow on the centrifugal disc.

## Revendications

1. Dispositif pour déterminer la quantité distribuée par un épandeur centrifuge d'engrais qui distribue les produits en forme de grains, fournis de façon réglable à au moins un disque d'épandage par l'intermédiaire d'au moins un organe de dosage, de façon à les éjecter selon un éventail d'éjection répartissant les produits à la surface du sol ;
au moins un capteur assure la saisie d'au moins des zones partielles de l'éventail d'épandage et coopère avec un ordinateur de bord,
**caractérisé en ce que**
le dispositif comprend également un dispositif de pesée (11) pour déterminer la quantité des produits distribuée,
l'installation de pesée (11) coopère avec l'ordinateur de bord (8),
l'ordinateur de bord (8) contient en mémoire un programme de calibrage par lequel le capteur (13, 14, 16, 17) détectant l'éventail de distribution est calibré en fonction des valeurs quantitatives distribuées, fournies par l'installation de pesée (11).

2. Dispositif selon la revendication 1,
**caractérisé en ce que**
le capteur (13, 14, 16, 17) saisit des données concernant la densité effective des grains pour déterminer à l'aide de l'ordinateur de bord (8), dans une opération de calibrage, la relation fonctionnelle entre la densité de grains et le débit massique distribué.

3. Dispositif selon les revendications précédentes,
**caractérisé en ce que**
l'ordinateur de bord (8) comporte un dispositif d'affichage,
l'ordinateur de bord (8) comporte un programme d'exploitation qui, partant des densités de grains déterminées par le capteur (13, 14, 16, 17), surveille la quantité des produits effectivement distribuée par comparaison à une quantité de consigne à distribuer, et en cas de dépassement de la limite de tolérance fixée selon la quantité de consigne à distribuer, un signal de message est émis par le dispositif d'affichage d'une manière optique et/ ou acoustique.

4. Dispositif selon les revendications précédentes,
**caractérisé en ce que**
le dispositif d'affichage indique la concordance entre la quantité de consigne à distribuer et la quantité effectivement distribuée dans une certaine plage de tolérance.

5. Dispositif selon les revendications précédentes,
**caractérisé en ce que**
l'ordinateur de bord (8) comporte un afficheur qui indique au moins sensiblement la quantité à distribuer par surface, par chaque disque (5).

6. Dispositif selon les revendications précédentes,
**caractérisé en ce qu'**
un capteur est associé à chaque disque (5).

7. Dispositif selon les revendications précédentes,
**caractérisé en ce que**
l'ordinateur de bord (8) contient en mémoire un programme d'exploitation et de réglage qui, sur le fondement de ce programme, commande les valeurs de réglage de l'installation de dosage.

8. Dispositif selon les revendications précédentes,
**caractérisé en ce que**
pour régler une répartition régulière des produits, on commande des éléments de réglage (7) pour la fourniture du flux des produits au disque d'épandage, à l'aide de l'ordinateur de bord (8).
